Europäisches Patentamt

European Patent Office

Office européen des brevets

(19)

(11) Publication number: **0 307 997**

**A1**

(12) # EUROPEAN PATENT APPLICATION

(21) Application number: **88201887.2**

(22) Date of filing: **05.09.88**

(51) Int. Cl.⁴: **C04B 28/02 , C04B 24/22 , E21B 33/138**

(30) Priority: **16.09.87 FR 8712859**

(43) Date of publication of application: **22.03.89 Bulletin 89/12**

(84) Designated Contracting States: **DE GB IT NL**

(71) Applicant: **PUMPTECH N.V.**
**Atlantic House Noorderlaan 147 Bus 5C**
**B-2030 Antwerpen(BE)**

(72) Inventor: **Hendriks, Hugo**
**83, Cours Fauriel**
**F-42100 Saint-Etienne(FR)**

(74) Representative: **Richebourg, Michel**
**Dowell Schlumberger Z.I. Molina Chazotte**
**F-42000 Saint-Etienne(FR)**

(54) **Dispersing agent for cement-slurry compounds, compounds containing this agent and procedures for the cementing of oil wells or similar.**

(57) The invention is a dispersing agent for cement-slurry compounds: the magnesium salt of the product of condensation of napthaleno-sulfonic acid and formaldehyde. It also covers cement-slurry compounds containing this dispersing agent, and the associated applications in the cementing of oil wells or similar.

The Invention eliminates "free water" even at low temperatures and with those cements most susceptible to this phenomenon.

EP 0 307 997 A1

## Dispersing agent for cement-slurry compounds, compounds containing this agent, and the corresponding cementing procedures for oil wells or similar.

This Invention covers a new dispersing agent for cement-slurry compounds. II also covers cement-slurry compounds containing the dispersing agent, and associated applications in the cementing of oil wells or similar.

This Invention covers a new dispersing agent whose use has proven to be particularly interesting. II allows control of "free water" by eliminating the phenomenon of "overdispersion".

The cementing of oil, gas, injection, geothermal or similar wells entails injection of cement-slurry compounds by pumping.

To facilitate pumping, cement-slurry compounds must have the lowest possible plastic viscosity (PV) and yield value (YV). These rheological characteristics are calculated according to the Bingham plastic model.

In order to reduce these values, it is common practice to add chemical agents, known as dispersing agents, to the mix water.

- The sodium salt of the product of condensation of napthaleno-sulfonic acid and formaldehyde (NaPNS) is used, for example, for this purpose in compound cement slurries corresponding to the previous state of the art.

However, it is well known that the use of such agents is delicate: it calls for fine control of the product quantity used: enough of the product must be added to produce the required effect (low values for the rheological characteristics, PV and YV), without producing the phenomenon known as "overdispersion", and consequently the formation of "free water".

This phenomenon is described in detail in the application for French Patent of Invention FR-A-2 540 097 included here for reference.

Exceeding a certain concentration of the dispersing agent result in repelling forces between the cement particles, which then behave as elementary entities and settle, loading to the formation of "free water". The term "free water" refers to more-or-less clear phase floating on the top surface of the cement column in the event of the above-mentioned phenomenon of "overdispersion".

The problem is even more serious when easy-to-disperse cements are used. As far as the cementing of oil wells is concerned, the applicant has found that the relevant cements can be divided into two basic categories:
- easy-to-disperse cements, such as Dyckerhoff Class-G tropical,
- difficult-to-disperse cements, such as Cemoil Class-G.

"Overdispersion" is a problem frequently encountered with cements in the first category. In this case, it is necessary to adjust the concentration of the dispersing agent precisely to obtain a low yield value for the cement-slurry compounds (e.g. lower than $2.44 10^{-2}$ $g/cm^2$ (5 lbs/100 $ft^2$)) without producing excessive settling (e.g. a level of "free water" lower than 3 %). This adjustment is extremely difficult to make in the often difficult environment encountered in the field.

"Overdispersion" is also one of the most critical problems encountered with deflected wells.

A solution to this problem was proposed in Patent FR 2 540 097. Along with the classic dispersing agent, it involves using a "free water" control agent, chosen particularly from the soluble salts of magnesium, transition metals and nickel, or their mixtures. The most effective control agents include $MgCl_2$, $6H_2O$, and $NiCl_2$, $6H_2O$.

Although this solution represents important progress, it is not entirely satisfactory, particularly at low temperatures with very-easy-to-disperse cements (such as Dyckerhoff Class-G North Sea cement or Italcimenti from the Scala di Giocca plant). Even when the above-mentioned "free water" control agents are used ($NiCl_2$ for example), fine adjustment of the concentration of the dispersing agent is still necessary to eliminate "overdispersion". Furthermore, nickel is an element which is harmful to the environment.

The present Invention concerns a new dispersing agent which allows control of the "free-water" in cement-slurry compounds for cementing of oil wells or similar.

It is obvious that use of the new dispersing agent for the cementing of oil wells offers equivalent advantages in the cementing of geothermal, water and gas wells.

The dispersing agent covered by the Invention is the magnesium salt of the product of condensation of napthaleno-sulfonic acid and formaldehyde (MgPNS).

Surprisingly, the magnesium salt (MgPNS) has proven to be considerably more effective than the sodium salt (NaPNS).

There is no "overdispersion" for a large range of concentrations with this new dispersing agent, and this even with "very-easy-to-disperse" cements and even at low temperatures.

Furthermore, this new dispersing agent can be used in solid or liquid form. This possibility of choice is an important advantage for the man in the field, for practical product handling reasons.

Finally, its use proved to have only the slightest influence on the thickening time of cement slurries.

The Invention also covers the use of the stated magnesium salt in cement slurries used for cementing of oil wells or similar.

The magnesium salt does so very effectively and, as indicated above, can be used for a large range of concentrations without creating "overdispersion". Generally for compounds corresponding to the Invention, the dispersing agent is used at a rate of 0.4 to 1.5% by weight of cement.

It may be added to the compounds as a solid or as an aqueous solution.

In addition to water, cement and the dispersing agent covered by the Invention, these compounds may contain other traditional additives employed in well cementation. They remain homogeneous while standing, without use of a "free water" control agent as required by the previous state of the art.

The Invention also covers cementing procedures for oil wells or similar, including normal pumping methods for cement-slurry compounds containing the dispersing agent covered by the Invention.

The dispersing agent can be added dry to the cement or predissolved in the mix water or even added after the mixing of the cement and the water. The dispersing agent may be used either as a powder or as a solution in water, with concentrations of up to 40% by weight.

Other characteristics and advantages of the Invention will be better appreciated by studying the test results given bellow:

The test conditions were:

The rheological parameters (PV and YV) were calculated according to API standards from readings on a rotating viscometer (CHAN 35) at 300, 200, 100, 60 and 30 rpm.

The quantity of "free water" was determined as follows: the slurry was mixed at the indicated temperature according to the API standards in a consistometer, operating at atmospheric pressure. It was then remixed in a Waring mixer for 35 sec. at 12,000 rpm. Next 250 cc of the slurry were poured into a 250 cc graduated cylinder which was the sealed. After two hours standing time at room temperature, the volume of "free water" was measured. This was then divided by 2.5 to give the percentage of "free water".

The tests produced the results given in the attached tables I to VI. They were performed with different types of cement and at different temperatures.

## Table I

The results in this table were obtained with Dyckerhoff Class-G North Sea cement at 85 °C (185 °F) using:

- a traditional dispersing agent corresponding to previous state of the art (NaPNS),
- a mixture of the above-mentioned dispersing agent with a "free water" control agent ($NiCl_2$, $6H_2O$) according to Patent application FR 2 540 097.

At 85 °C (185 °F) the results obtained with NaPNS alone are not satisfactory: either the yield value (YV) or the percentage of "free water" is too high. The phenomenon of "overdispersion" results in negative yield values.

The addition of 5 % of $NiCl_2$, $6H_2O$ to the above-mentioned NaPNS leads to considerably more satisfactory results.

For a fairly large range of NaPNS concentrations (5.33 to 13.32 l/T (0.06 to 0.14 gal/sk)), YV $<2.44 \, 10^{-2}$ $g/cm^2$ (5 lbs/100 $ft^2$), and "free water" is less than 4%.

## Table II

The results presented in this table show that at a low temperature: 29.4 °C instead of 85 °C (85 °F instead of 185 °F), the NaPNS + $NiCl_2$ mixture is no longer efficient enough. In fact, at this temperature the percentage of "free water" is only acceptable for a very small range of dispersing agent concentrations. This causes over-rigid constraints in practical (i.e. field) applications.

## Table III

The results obtained with the same cement and the dispersing agent covered by the Invention (MgPNS) are also shown. The dispersing agent is used either as a solid or as an aqueous solution of 40% by weight.

At 85 °C (185 °F), as well as at 29.4 °C (85 °F), stable cement-slurry compounds are obtained. They are characterized by low rheological parameters. The "free water" is often less than 1.5 % and always less than 2.5 %.

## Table IV

Specialists know that Italcimenti cement from the Scale di Giocca plant is very easy to disperse.

Table IV shows that at 29.4 °C (85 °F) the addition of the "free water" control agent, $NiCl_2, 6H_2O$, does not result in a stable cement-slurry compound except for a narrow range of NaPNS concentrations: around 10.66 l/T (O.12 gal/sk).

Using MgPNS, however, satisfactory results are obtained over a large range of concentrations, both at 29.4 °C and 85 °C (85 °F and 185 °F).

## Table V

Similarly, extremely interesting results are obtained using the dispersing agent covered by the Invention (MgPNS) with an easy-to-disperse cement such as Lonestar Class-H. Some of these results are given in table V.

## Table VI

Here it is shown that the dispersing agent covered by the Invention can also be used advantageously with cement which is less easy to disperse. Using the additive according to the Invention. Dyckerhoff Class-G tropical cement can easily be dispersed without creating a high percentage of "free water".

Lastly, tests were made to determine the impact of the new dispersing agent on the slurry setting time. A test was performed with Dyckerhoff Class-G North Sea cement at 85 °C (185 °F) in a consistometer at atmospheric pressure.

The slurry contained 1% MgPNS in relation to the weight of the cement and took 4 hrs. 25 min. to reach 100 units BC.

This is compares favorably with the setting time obtained with the same cement and 8.88 l/T (0.1 gal/sk) of NaPNS + 5 % $NiCl_2, 6H_2O$: 4 hrs. 10 min.

In conclusion, the delaying effect of the additive covered by the Invention is very minor.

The new dispersing agent, by combining PNS and Mg - both already used separately - represents a major advantage. It eliminates the need for precise measurement of mixtures prepared on site, even at low temperatures and even for cement known to be most susceptible to "overdispersion" and nevertheless often used on sites for other qualities.

Table I

| Test performed at 85°C (185°F) with Dyckerhoff Class-G North Sea cement with a density of 1.89 g/m³ (15.8 ppg) | | | | | | |
|---|---|---|---|---|---|---|
| | | | Rheology | | | |
| Dispersing agent | Concentration | | Yield value | | Plastic viscosity | "Free water" |
| | (l/T) | (gal/sk) | $(10^{-2}g/cm^2)$ | (lbs/100 ft²) | (cp) | (%) |
| NaPNS | 3.55 | 0.04 | 5.56 | 11.4 | 11.8 | 1.4 |
| NaPNS | 5.33 | 0.06 | 0.39 | 0.8 | 9.9 | 4.4 |
| NaPNS | 7.10 | 0.08 | - 0.15 | - 0.3 | 9.0 | 6.4 |
| NaPNS | 8.88 | 0.10 | - 0.19 | - 0.4 | 6.9 | 13.2 |
| NaPNS | 13.32 | 0.15 | - 0.15 | - 0.3 | 6.2 | 52 |
| NaPNS = 5% NiCl₂, 6H₂O | 3.55 | 0.04 | 10.39 | 21.3 | 18.7 | 1.0 |
| NaPNS = 5% NiCl₂, 6H₂O | 5.33 | 0.06 | 1.46 | 3.0 | 9.4 | 2.8 |
| NaPNS = 5% NiCl₂, 6H₂O | 7.10 | 0.08 | 0.83 | 1.7 | 10.2 | 3.2 |
| NaPNS = 5% NiCl₂, 6H₂O | 8.88 | 0.10 | 0.39 | 0.8 | 11.1 | 3.0 |
| NaPNS = 5% NiCl₂, 6H₂O | 13.32 | 0.15 | 0.49 | 1.0 | 9.8 | 1.6 |

Table II

| Tests performed at 29.4°C (85°F) with Dyckerhoff Class-G North Sea cement with a density of 1.89 g/cm³ (15.8 ppg) | | | | | | |
|---|---|---|---|---|---|---|
| | | | Rheology | | | |
| Dispersing agent | Concentration | | Yield value | | Plastic viscosity | "Free water" |
| | (l/T) | (gal/sk) | $(10^{-2}g/cm^2)$ | (lbs/100 ft²) | (cp) | (%) |
| NaPNS + 5% NiCl₂, 6H₂O | 3.55 | 0.04 | 2.49 | 5.1 | 16.9 | 6.4 |
| NaPNS + 5% NiCl₂, 6H₂O | 5.33 | 0.06 | 0.54 | 1.1 | 15.3 | 10.8 |
| NaPNS + 5% NiCl₂, 6H₂O | 7.10 | 0.08 | - 0.10 | - 0.2 | 14.2 | 2.4 |
| NaPNS + 5% NiCl₂, 6H₂O | 8.88 | 0.10 | - 0.34 | - 0.7 | 13.5 | 17.2 |
| NaPNS + 5% NiCl₂, 6H₂O | 10.66 | 0.12 | - 0.29 | - 0.6 | 13.0 | 20.0 |

Table III

| Tests performed with Dyckerhoff Class-G North Sea cement with a density of 1.89 g/cm³ (15.8 ppg) and the dispersing agent covered by the Invention: MgPNS | | | | | | | | |
|---|---|---|---|---|---|---|---|---|
| | | | | | Rheology | | | |
| Dispersing agent | Concentration (in % by weight of cement) | | Temperature | | Yield value | | Plastic viscosity | "Free water" |
| | | | ($^\circ$C) | ($^\circ$F) | ($10^{-2}$g/cm²) | (lbs/100 ft²) | (cp) | (%) |
| MgPNS solid | 0.4 | | 29.4 | 85 | 0.63 | 1.3 | 19.7 | 2.0 |
| MgPNS solid | 0.6 | | 29.4 | 85 | 0.44 | 0.9 | 17.1 | 2.0 |
| MgPNS solid | 0.8 | | 29.4 | 85 | 0.24 | 0.5 | 14.5 | 0.2 |
| MgPNS solid | 1.0 | | 29.4 | 85 | 0.0 | 0.0 | 15.1 | 0.0 |
| MgPNS solid | 1.2 | | 29.4 | 85 | 0.10 | 0.2 | 15.3 | 0.4 |
| MgPNS solid | 0.6 | | 85 | 185 | 2.88 | 5.9 | 9.9 | 1.6 |
| MgPNS solid | 0.8 | | 85 | 185 | 1.02 | 2.1 | 15.4 | 0.4 |
| MgPNS solid | 1.0 | | 85 | 185 | 1.07 | 2.2 | 14.1 | 0.8 |
| MgPNS solid | 1.5 | | 85 | 185 | 1.02 | 2.1 | 15.0 | 0.4 |
| | (l/t) | (gal/sk) | | | | | | |
| MgPNS solid | 8.8 | 0.10 | 29.4 | 85 | 0.73 | 1.5 | 14.5 | 2.4 |
| MgPNS solid | 13.32 | 0.15 | 29.4 | 85 | 0.73 | 1.5 | 14.5 | 0.0 |
| MgPNS solid | 17.76 | 0.20 | 29.4 | 85 | 0.10 | 0.2 | 18.6 | 0.0 |

Table IV

| Tests performed with italcimenti cement, Scala di Giocca plant with a density of 1.89 g/cm³ (15.8 ppg) | | | | | | | | |
|---|---|---|---|---|---|---|---|---|
| | | | | | Rheology | | | |
| Dispersing agent | Concentration | | Temperature | | Yield value | | Plastic viscosity | "Free water" |
| | (l/t) | (gal/sk) | ($^\circ$C) | ($^\circ$F) | ($10^{-2}$g/cm²) | (lbs/100 ft²) | (cp) | (%) |
| NaPNS + 5% NiCl₂, 6H₂O | 3.55 | 0.04 | 29.4 | 85 | | | | 2.8 |
| NaPNS + 5% NiCl₂, 6H₂O | 5.33 | 0.06 | 29.4 | 85 | | | | 7.2 |
| NaPNS + 5% NiCl₂, 6H₂O | 7.10 | 0.08 | 29.4 | 85 | | | | 6.8 |
| NaPNS + 5% NiCl₂, 6H₂O | 8.88 | 0.10 | 29.4 | 85 | | | | 6.4 |
| NaPNS + 5% NiCl₂, 6H₂O | 10.66 | 0.12 | 29.4 | 85 | 0.10 | 0.2 | 14.8 | 1.2 |
| NaPNS + 5% NiCl₂, 6H₂O | 12.43 | 0.14 | 29.4 | 85 | - 0.39 | - 0.8 | 15.9 | * |
| NaPNS + 5% NiCl₂, 6H₂O | 14.21 | 0.16 | 29.4 | 85 | | | | 20 |
| | (in % by weight of cement) | | | | | | | |
| MgPNS solid | 0.4 | 29.4 | | 85 | 1.51 | 3.1 | 19.9 | 2.4 |
| MgPNS solid | 0.5 | 29.4 | | 85 | 0.83 | 1.7 | 15.2 | 2 |
| MgPNS solid | 1.0 | 29.4 | | 85 | 0.73 | 1.5 | 16.4 | 0 |
| MgPNS solid | 1.2 | 29.4 | | 85 | - 0.15 | - 0.3 | 15.7 | * |
| MgPNS solid | 0.5 | 85 | | 185 | 3.66 | 7.5 | 12.9 | 1.6 |
| MgPNS solid | 1.0 | 85 | | 185 | 1.27 | 2.6 | 12.3 | 0.8 |
| MgPNS solid | 1.5 | 85 | | 185 | 1.6 | 3.3 | 12.5 | 0.4 |

* During these tests, a high degree of settling was observed in the V.M. dome. The % of free water was not measured.

Table V

| Tests performed at 29.4 °C (85 °F) with Lonestar Class-H cement with a density of 1.96 g/cm³ (16.4 ppg) and the dispersing agent covered by the Invention: MgPNS | | | | | |
|---|---|---|---|---|---|
| | | Rheology | | | |
| Dispersing agent | Concentration (in % by weight of cement) | Yield value | | Plastic viscosity | "Free water" |
| | | $10^{-2}$g/cm² | (lbs/100 ft²) | (cp) | (%) |
| MgPNS solid | 0.4 | 0.73 | 1.5 | 17.4 | 1.2 |
| MgPNS solid | 1.0 | 0.63 | 1.3 | 20.6 | 0.4 |
| MgPNS solid | 1.2 | 0.24 | 0.5 | 14.5 | 0 |

Table VI

| Tests performed at 85 °C (185 °F) with Dyckerhoff Class-G tropical cement with a density of 1.89 g/m³ (15.8 ppg) and the dispersing agent covered by the Invention : MgPNS | | | | | |
|---|---|---|---|---|---|
| | | Rheology | | | |
| Dispersing agent | Concentration (in % by weight of cement) | Yield value | | Plastic viscosity | "Free water" |
| | | ($10^{-2}$g/cm²) | (lbs/100 ft²) | (cp) | (%) |
| MgPNS solid | 1.0 | 2.44 | 5.0 | 10.5 | 1.2 |
| MgPNS solid | 1.5 | 1.76 | 3.6 | 19.7 | 0.4 |

## Claims

1. Dispersing agent permitting control of "free water" in cement-slurry compounds for cementing oil, gas, geothermal or similar wells, and characteristized by the fact that it consists of the magnesium salt of the product of condensation of naphtaleno-sulfonic acid and formaldehyde.

2. Cement-slurry compounds for the cementing of oil wells or similar, and characterized by the fact that they contain the dispersing agent mentioned in Claim 1.

3. Compounds covered by Claim 2, and characterized by the fact that they contain between 0.4 and 1.5% of dispersing agent by weight of cement.

4. Compounds covered by Claims 2 or 3, and characterized by the fact that the dispersing agent is added as a solid on in solution.

5. Cementing procedures for oil wells or similar, characterized by the pumping of a compound corresponding to any of Claims 2 to 4.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 057 418 (KAO SOAP CO., LTD) <br> * Claims 1,3,4,13; example 19 * <br> --- | 1-4 | C 04 B 28/02 <br> C 04 B 24/22 <br> E 21 B 33/138 |
| X | US-A-4 659 750 (L.P. SEDILLO et al.) <br> * Claims 1,5; column 1, paragraph 1 * <br> --- | 1-5 | |
| X | EP-A-0 214 412 (CHEMIE LINZ AG) <br> * Claims 1,5; column 4, lines 36-39; example 19 * <br> --- | 1-4 | |
| A | EP-A-0 073 606 (DIAMOND SHAMROCK CORP.) <br> * Claims 1,4,13,24; abstract * <br> --- | 1-5 | |
| A,D | EP-A-0 115 463 (ETUDES ET FABRICATION DOWELL SCHLUMBERGER) <br> * Claims 1,7-9; page 3, line 9 - page 4, line 10 * <br> ----- | 1-5 | |
|  |  |  | TECHNICAL FIELDS SEARCHED (Int. Cl.4) <br><br> C 04 B 28/00 <br> C 04 B 24/00 <br> E 21 B 33/00 |

The present search report has been drawn up for all claims

| Place of search | Date of completion of the search | Examiner |
|---|---|---|
| THE HAGUE | 24-11-1988 | HAUCK, H.N. |